# EUROPEAN PATENT APPLICATION

(11) **EP 4 773 691 A1**
(43) Date of publication of application: **08.07.2026**
(21) Application number: 24864473.4
(22) Date of filing: 30.08.2024
(51) Int. Cl.: H04W 72/0446

(54) **COMMUNICATION SENSING METHOD AND COMMUNICATION DEVICE**

(30) Priority: 15.09.2023 CN 202311193231
(71) Applicant: ZTE Corporation, Shenzhen, Guangdong 518057 (CN)
(72) Inventor: WU, Zengqiang, Shenzhen, Guangdong 518057 (CN); WU, Guangde, Shenzhen, Guangdong 518057 (CN); DUAN, Yajuan, Shenzhen, Guangdong 518057 (CN); DUAN, Bin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/115836
(87) International publication number: WO 2025/055751

(57) **Abstract**

Provided in the embodiments of the present application are a communication sensing method and a communication device. The method comprises: acquiring sensing signaling; and on the basis of the sensing signaling, determining a first group of antennas and a second group of antennas in an antenna array, wherein in a sensing time-domain unit, the first group of antennas are used for sending a sensing signal and the second group of antennas are used for receiving the reflected sensing signal, and in a communication time-domain unit, all antennas in the antenna array are used for communication beamforming.

## Description

### CROSS-REFERENCE TO RELATED APPLICATIONS

The present application claims priority to the Chinese patent application No. 2023111932314 filed on September 15, 2023 to the CNIPA, and entitled "COMMUNICATION SENSING METHOD AND COMMUNICATION DEVICE", the entire content of which is incorporated herein by reference.

### TECHNICAL FIELD

The present application relates to the technical field of communications, in particular to a communication and sensing method and a communication device.

### BACKGROUND

The future world, such as an artificial intelligence (Al) service, an immersive service, and a digital twin service, has increasingly high requirements for mobile communication, and various complex application scenarios display a high degree of integration between communication and sensing. Meanwhile, with the development of a communication frequency band towards a higher frequency band, the overlap with a traditional radar sensing frequency band is becoming increasingly apparent. Implementing communication and sensing functions with the same frequency spectrum and hardware facilitates the reduction of devices, costs, and sizes.

In order to achieve a communication sensing function, in the related art, radar and communication usually share all hardware modules, except for antennas, of a traditional communication link. The manner used in this solution is to isolate transmitting from receiving by distancing a transmitting antenna from a receiving antenna or using high isolation measures such as adding partitions. This will bring the following problems. In a first aspect, a single pair of antennas cannot be used for transmitting and receiving. If the overall antenna size remains unchanged, the corresponding transmitting or receiving antenna gain will be reduced by half, and meanwhile, the number of beamforming channels is also reduced, affecting communication performance. In a second aspect, if the scale of the transmitting antenna remains the same as a previous communication antenna, the overall antenna size is doubled, which directly increases the size and cost of an entire integrated sensing and communication base station.

### SUMMARY

An objective of the embodiments of the present application is to provide a communication and sensing method and a communication device, which can solve the problem that a communication sensing solution in the related art affects communication performance or increases an antenna size and cost.

In a first aspect, embodiments of the present application provide a communication and sensing method, including: acquiring sensing signaling; and determining, based on the sensing signaling, a first group of antennas and a second group of antennas in an antenna array, wherein in a sensing time-domain unit, the first group of antennas are used for transmitting a sensing signal and the second group of antennas are used for receiving the reflected sensing signal; and in a communication time-domain unit, all antennas in the antenna array are used for communication beamforming.

In a second aspect, embodiments of the present application provide a communication device, including: an antenna array that supports being divided into a first group of antennas and a second group of antennas, wherein in a sensing time-domain unit, the first group of antennas are used for transmitting a sensing signal and the second group of antennas are used for receiving the reflected sensing signal; and in a communication time-domain unit, all antennas in the antenna array are used for communication beamforming.

In a third aspect, embodiments of the present application provide a communication device, including: a memory, a processor, and computer-executable instructions stored on the memory and capable of running on the processor. The computer-executable instructions, when executed by the processor, implement the steps of the method described in the first aspect.

In a fourth aspect, embodiments of the present application provide a computer-readable storage medium. The computer-readable storage medium is configured to store computer-executable instructions. The computer-executable instructions, when executed by a processor, implement the steps of the method described in the first aspect.

### BRIEF DESCRIPTION OF DRAWING(S)

To illustrate the technical solutions in embodiments of the present application or in the prior art more clearly, the accompanying drawings required for describing the embodiments or the prior art will be briefly introduced below. Apparently, the accompanying drawings in the following description are only some embodiments recorded in the present application, and a person of ordinary skill in the art may still derive other accompanying drawings from these accompanying drawings without creative efforts.
FIG. 1 is a schematic flowchart of a communication and sensing method provided by embodiments of the present application.
FIG. 2 is a schematic architecture diagram of a single integrated sensing and communication base station provided by embodiments of the present application.
FIG. 3 is a schematic structural diagram of an antenna array provided by embodiments of the present application.
FIG. 4 is a time slot diagram of communication and sensing time-division operation of a single integrated sensing and communication base station provided by embodiments of the present application.
FIG. 5 is a diagram of selecting a low-power-consumption antenna group for an unmanned aerial vehicle monitoring scenario provided by embodiments of the present application.
FIG. 6 is a diagram of selecting a high-performance antenna group for a vehicle positioning and recognition scenario provided by embodiments of the present application.
FIG. 7 is a flowchart of a flexible antenna group selection provided by embodiments of the present application.
FIG. 8 is a schematic diagram of a hardware structure of a communication device for performing a communication and sensing method provided by embodiments of the present application.

### DETAILED DESCRIPTION

In order to make those skilled in the art understand the technical solutions in the present application better, the technical solutions in the embodiment of the present application will be described below clearly and completely with reference to the drawings in the embodiments of the present application. Apparently, the described embodiments are only part of the embodiments of the present application, but not all the embodiments. All other embodiments obtained by those ordinarily skilled in the art based on the embodiments in the present application without making creative efforts should fall within the scope of protection of the present application.

A communication and sensing method provided by embodiments of the present application may be applied in the architecture of a single integrated sensing and communication base station, where communication and (radar) sensing operate in a time-division manner. By introducing a flexible antenna grouping technology, an additional sensing function may be added while the hardware of a communication device remains unchanged. The antenna grouping technology supports participation of all antenna channels in a communication time-domain unit (such as a communication time slot or symbol) in communication beamforming; and supports some antennas transmitting sensing signals and some antennas receiving the sensing signals in a radar sensing time-domain unit (such as a sensing time slot or symbol), which solves the problem that a communication sensing solution in the related art affects communication performance or increases an antenna size and cost.

In the communication and sensing method provided by the embodiment of the present application, the flexible antenna grouping technology is adopted, which can adaptively select transmitting and receiving antenna groups according to the requirements of a sensing scenario. For a scenario requiring low sensing performance, fewer antenna channels may be selected to meet a demand of reducing power consumption. For a scenario requiring high sensing performance, antenna groups with higher numbers of antenna channels are adaptively selected to preferentially ensure sensing performance, which will be explained in detail below in conjunction with specific embodiments.

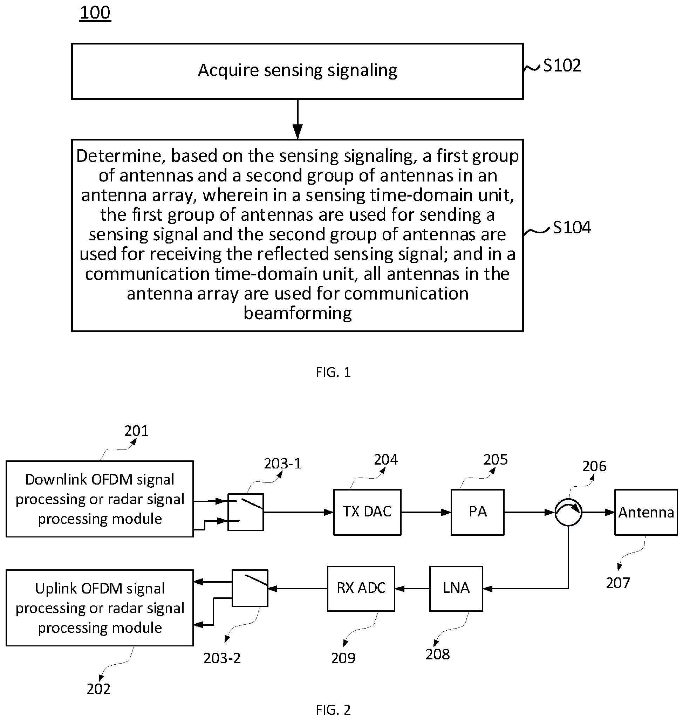

FIG. 1 shows a schematic flowchart of a communication and sensing method provided by embodiments of the present application. The method may be performed by a communication device. In other words, the method may be performed by software or hardware installed in the communication device. As shown in FIG. 1, the method may include the following steps.

At S102, sensing signaling is acquired.

The sensing signaling may be used for indicating sensing sequence data, and the sensing sequence data may be used for transmitting or receiving a sensing signal. The sensing signaling may also carry information except the sensing sequence data, such as carrying a sensing performance requirement, and the sensing performance requirement is used for assisting in determining a first group of antennas and a second group of antennas.

At S104, based on the sensing signaling, a first group of antennas and a second group of antennas in an antenna array are determined, wherein in a sensing time-domain unit, the first group of antennas are used for transmitting a sensing signal and the second group of antennas are used for receiving the reflected sensing signal; and in a communication time-domain unit, all antennas in the antenna array are used for communication beamforming.

It may be understood that the antenna array usually includes a plurality of antenna elements (briefly referred to as antennas), the first group of antennas determined in this step may include a plurality of antennas, and the second group of antennas may also include a plurality of antennas. An isolation between the antennas in the first group of antennas and the antennas in the second group of antennas may meet a predefined isolation index value, such as being greater than or equal to the predefined isolation index value, so as to minimize self-interference in transmitting and receiving sensing signals in the sensing time-domain unit.

Usually, one antenna corresponds to one antenna channel. Therefore, determining the first group of antennas and the second group of antennas in the antenna array described in this embodiment may also be described as determining a first group of antenna channels and a second group of antenna channels.

The sensing time-domain unit mentioned in this embodiment may be a time-domain unit used for transmitting and receiving the sensing signal, and the time-domain unit may be a time slot or symbol, etc. The communication time-domain unit mentioned in this embodiment may be a time-domain unit used for achieving uplink and downlink communication, and the time-domain unit may also be a time slot or symbol, etc.

In one embodiment, after S104, the following steps may be further included: in the sensing time-domain unit, the first group of antennas are controlled to transmit the sensing signal, and the second group of antennas are controlled to receive the reflected sensing signal, so as to achieve a sensing function; and in the communication time-domain unit, all antennas in the antenna array are controlled to perform communication beamforming, so as to achieve high-gain communication performance.

According to the communication and sensing method provided by the embodiment of the present application, the first group of antennas and the second group of antennas in the antenna array may be determined based on the sensing signaling, the first group of antennas are used for transmitting the sensing signal in the sensing time-domain unit and the second group of antennas are used for receiving the reflected sensing signal in the sensing time-domain unit; and in the communication time-domain unit, all the antennas in the antenna array are used for communication beamforming. Due to the use of an antenna grouping technology, compared to a solution of distancing a transmitting antenna from a receiving antenna or adding a partition, the communication performance may be improved, and the problem of increasing the antenna size and cost is avoided.

The communication and sensing method provided by the embodiment of the present application can be used to add a sensing function to the base station by remaining existing communication simulation hardware unchanged, i.e., without adding a sensing hardware circuit. Radar transmitting and receiving self-interference of radars can be cancelled by selection of transmitting and receiving channels of antenna groups without extra self-interference cancellation design. In addition, a multi-channel antenna beamforming function of the communication time-domain unit is not affected, and there is no impact on the operation of the communication time-domain unit at all.

In one embodiment, the sensing signaling acquired in S102 may further be used for indicating a sensing performance requirement, and determining, based on the sensing signaling, the first group of antennas and the second group of antennas in the antenna array in S104 includes that: a target antenna configuration file is determined from a plurality of sets of antenna configuration files based on the sensing performance requirement; and the first group of antennas and the second group of antennas in the antenna array are determined based on the target antenna configuration file; where, among the plurality of sets of antenna configuration files, at least two sets of antenna configuration files correspond to different sensing performance requirements respectively.

In this embodiment, the sensing performance requirement may be reflected by at least one of the following: angle measuring accuracy, ranging accuracy, speed measurement accuracy, coverage distance, or constant false alarm rate, etc. Different sensing performance requirements may correspond to different application scenarios, and the different sensing performance requirements mentioned here may refer to different levels (or magnitudes) of sensing performance requirements.

For example, for a scenario of unmanned aerial vehicle intrusion monitoring, only the presence of unmanned aerial vehicles in a designated area needs to be monitored, and thus the required sensing performance requirement is not high, for example, it is just required that the ranging accuracy and the speed measurement accuracy are lower than certain thresholds respectively. For a lane and traffic monitoring scenario, vehicles in different lanes need to be positioned precisely, which imposes a very high requirement on accuracy and resolution performance, and therefore, the required sensing performance requirements are high, for example, the ranging accuracy and the speed measurement accuracy need to be higher than certain thresholds.

For example, the sensing performance requirements are divided into three levels: high, medium, and low. These three levels correspond to a first sensing scenario, a second sensing scenario, and a third sensing scenario, respectively. The first sensing scenario has the highest sensing performance requirement, and correspondingly requires the highest numbers of transmitting antennas (i.e. the number of antennas in the first group of antennas) and receiving antennas (i.e. the number of antennas in the second group of antennas), which is conducive to ensuring high-performance sensing. The third sensing scenario has the lowest sensing performance requirement, and correspondingly requires the lowest numbers of transmitting antennas and receiving antennas, which is beneficial for reducing power consumption. The second sensing scenario has the general sensing performance requirement, and correspondingly requires the transmitting antennas and receiving antennas whose numbers are between the two above, which is conducive to maintaining a balance between low power consumption and high sensing performance.

This embodiment may allow for flexible selection of antenna groups, and different antenna groups may be configured for different sensing performance scenarios. Adaptive antenna group selection helps reduce power consumption and enables flexible switching between a low-power-consumption scenario and a high-sensing-performance scenario.

In one embodiment, under different sensing performance requirements: the numbers of antennas in a first antenna group in the plurality of sets of antenna configuration files are different, and the numbers of antennas in a second antenna group in the plurality of sets of antenna configuration files are different.

In one embodiment, the level of the sensing performance requirement is positively correlated with the number of antennas in the first group of antennas, i.e., the higher the sensing performance requirement, the more antennas in the first group of antennas, which facilitates the improvement of sensing performance. On the contrary, the lower the sensing performance requirement, the fewer antennas in the first group of antennas, which facilitates reducing power consumption. Similarly, the level of the sensing performance requirement is positively correlated with the number of antennas in the second group of antennas, i.e., the higher the sensing performance requirement, the more antennas in the second group of antennas, which facilitates the improvement of sensing performance. On the contrary, the lower the sensing performance requirement, the fewer antennas in the second group of antennas, which facilitates reducing power consumption.

The method provided by any of the above embodiments may further include the following steps: the plurality of sets of antenna configuration files are generated based on at least one of the following: 1) an isolation between different antennas in the antenna array; or 2) following contents required by the plurality of different sensing performance requirements, respectively: the number of antennas in the first group of antennas and the number of antennas in the second group of antennas.

Based on any of the above embodiments, the sensing signaling may further be used for indicating sensing sequence data, and the method further includes that: in the sensing time-domain unit , the sensing signal is transmitted by the first group of antennas and the reflected sensing signal is received by the second group of antennas based on the sensing sequence data.

Corresponding to the above method embodiments, embodiments of the present application further provides a communication device (such as a base station). The communication device includes: an antenna array that supports being divided into a first group of antennas and a second group of antennas, wherein in a sensing time-domain unit, the first group of antennas are used for transmitting a sensing signal and the second group of antennas are used for receiving the reflected sensing signal; and in a communication time-domain unit, all antennas in the antenna array are used for communication beamforming.

In the embodiment of the present application, the first group of antennas and the second group of antennas may be divided in the antenna array, the first group of antennas are used for transmitting the sensing signal in the sensing time-domain unit and the second group of antennas are used for receiving the reflected sensing signal in the sensing time-domain unit; and in the communication time-domain unit, all the antennas in the antenna array are used for communication beamforming. Due to the use of an antenna grouping technology, compared to a solution of distancing a transmitting antenna from a receiving antenna or adding a partition, communication performance may be improved, and the problem of increasing the antenna size and cost is avoided.

In one embodiment, the communication device further includes a storage module, the storage module stores a plurality of sets of antenna configuration files, at least two sets of antenna configuration files correspond to different sensing performance requirements respectively, and the sensing performance requirement is used for determining a target antenna configuration file from the plurality of sets of antenna configuration files.

In one embodiment, the level of the sensing performance requirement is positively correlated with the number of antennas in the first group of antennas; and/or the level of the sensing performance requirement is positively correlated with the number of antennas in the second group of antennas.

To provide a detailed explanation of the communication and sensing method and the communication device provided in the embodiments of the present application, the following will be explained in conjunction with specific embodiments.

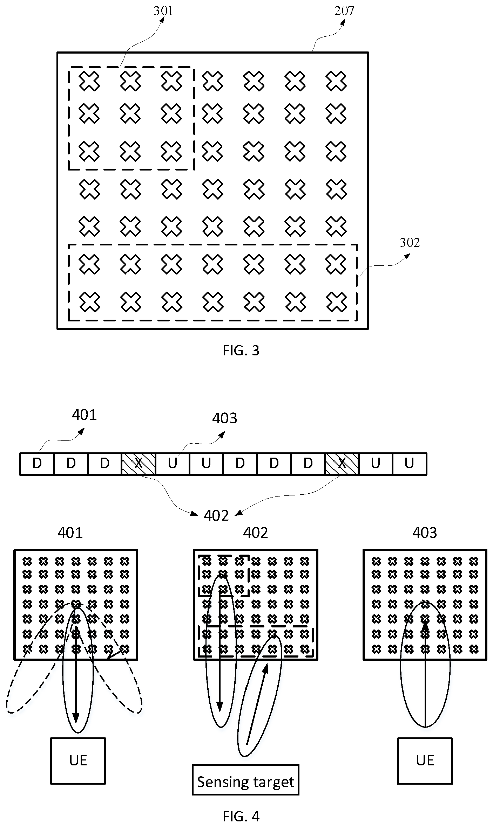

A base station architecture involved in the communication and sensing method provided by the embodiments of the present application is shown in FIG. 2 and FIG. 3, in which a transmitting antenna and receiving antenna pair is no longer used, instead, an antenna grouping technology is used to select transmitting and receiving channels of the antenna array in an original large communication array panel. The following modules are included.

A communication and radar signal processing module may be divided into: a downlink orthogonal frequency division multiplexing (OFDM) signal processing or radar signal processing module 201, and an uplink OFDM signal processing or radar signal processing module 202.

Communication and radar shared devices and modules mainly include: a TDD switching and framing unit 203, wherein the TDD switching and framing unit 203 mainly includes a TDD transmission switching and framing unit 203-1 and a TDD reception switching and framing unit 203-2; a shared transmission digital-to-analog conversion module 204 (TX DAC in FIG. 2); a transmitting power amplifier 205 (PA in FIG. 2); a circulator 206; an antenna array 207 (antenna shown in FIG. 2); a reception low-noise amplifier 208 (LNA in FIG. 2); and a reception analog-to-digital conversion module 209 (RX ADC in FIG. 2).

FIG. 3 mainly illustrates the antenna array 207 in FIG. 2. The antenna array 207 may be divided into two parts, and one part of channels is selected to form a radar sensing transmitting antenna 301, corresponding to the first group of antennas in the previous embodiment; and the other part of channels is selected to form a radar sensing receiving antenna 302, corresponding to the second group of antennas in the previous embodiment. The selection of the transmitting and receiving channels may be determined according to sensing performance requirement and the isolation between the channels of the antennas. The number of antennas in the antenna group shown in a dashed box in FIG. 3 is for illustration only and is not a specific limitation.

In a single integrated sensing and communication base station, communication and sensing functions are distinguished by operating in different time slots. As shown in FIG. 4, consistent with a traditional time division duplexing (TDD) communication system, transmission and reception of the base station are distinguished by different time slots. The base station uses a D time slot 401 for downlink communication and a U time slot 403 for uplink communication, and the D time slot 401 and the U time slot 403 correspond to the communication time-domain unit in the previous embodiments. All antenna arrays may be reused during communication time slots to maximize communication performance.

By adding an extra time slot or modifying original time slots, an X time slot 402 is used for sensing, and the X time slot 402 corresponds to the sensing time-domain unit in the previous embodiments.

The D time slot 401 is used for downlink communication of the base station. The TDD transmission switching and framing unit 203-1 communicates with a communication processing module in the downlink OFDM signal processing or radar signal processing module 201. The selection of the downlink OFDM signal processing module and a radar signal generating module (also known as the radar signal processing module) is distinguished by software control, while the TDD reception switching and framing unit 203-2 is not communicated. The communication processing module in the downlink OFDM signal processing or radar signal processing module 201 transmits a baseband signal to the transmission digital-to-analog conversion module 204, where the signal is converted from a baseband digital signal to an analog signal, and the analog signal is amplified to rated transmission power via the transmitting power amplifier 205, passes through the circulator 206, and is finally sent to UE by the antenna array 207.

The U time slot 403 is used for uplink communication of the base station. The TDD transmission switching and framing unit 203-1 is not communicated, and the TDD reception switching and framing unit 203-2 communicates with the communication processing module. The selection of the uplink OFDM signal processing module and the radar signal processing module 202 is distinguished by software control. A communication analog signal sent by the UE is received via the antenna array 207 and enters the low-noise amplifier 208 of a receiving link. Next, the analog signal is converted into a digital signal through the reception analog-to-digital conversion module 209, and the digital signal enters the communication processing module in the uplink OFDM signal processing or radar signal processing module 202 to complete communication functions such as signal demodulation.

The X time slot 402 is used for base station sensing. The base station transmits the sensing signal to a to-be-tested object, collects echoes reflected by the to-be-tested object, and studies the autocorrelation characteristics of the echoes and transmission waveforms to achieve sensing, which may include information such as a distance, a speed, and an angle.

In the X time slot 402, the TDD transmission switching and framing unit 203-1 communicates with a radar signal generation module in the downlink OFDM signal processing or radar signal processing module 201, and the TDD reception switching and framing 203-2 communicates with a radar signal processing module in the uplink OFDM signal processing or radar signal processing module 202. The radar signal generation module in the downlink OFDM signal processing or radar signal processing module 201 transmits a radar frequency modulated continuous wave (FMCW), and a linear frequency modulation (LFM) or OFDM signal. The digital signal is converted into an analog signal via the transmission digital-to-analog conversion module 204, and the analog signal is amplified to rated transmission power via the transmitting power amplifier 205, and finally sent to the to-be-tested object by the radar sensing transmitting antenna 301 in the antenna array 207. The echo signal reflected back by the to-be-tested object is received via the radar sensing receiving antenna 302 in the communication antenna array 207 and enters the low-noise amplifier 208 of the receiving link. Next, the analog signal is converted into the digital signal through the reception analog-to-digital conversion module 209. The digital signal enters the radar signal processing module in the uplink OFDM signal processing or radar signal processing module 202, and pulse compression, constant false alarm rate (CFAR) decision, multiple fast Fourier transforms (FFT) and other processing processes are completed in the radar signal processing module. The distance, speed, or angle estimation analysis is finally completed, and after completing all analyses, the visualization display is completed via post-processing.

It should be noted that in base station sensing of the X time slot 402, the radar transmission signal enters a receiver in two parts. One part is propagated to the to-be-tested target through a normal path, and the to-be-tested target reflects the echoes to the receiver. The other part is directly radiated or leaked into the receiver through space, and this part of energy is called radar transmission interference. Usually, the interference is high in level, which can cause the receiver to saturate and fail to operate, thereby affecting the radar's reception of echo signals. To address this interference issue, a traditional solution mainly involves adding analog cancellation, digital cancellation, and spatial domain cancellation. Analog cancellation requires additional delay amplitude modulation and other devices, which increases the hardware complexity and cost. Digital cancellation requires consumption of additional computing resources, which increases power consumption of a chip and algorithm complexity. Spatial domain cancellation usually solves the interference by pulling apart two antennas. A certain electrical length distinction of the transmitting antenna and the receiving antenna may be achieved by keeping a distance therebetween or adding a choke groove and other isolation measures, thereby improving the isolation, reducing leakage signal levels, and making the receiver unsaturated. However, the separation of the two antennas has an impact on the communication time slot. A certain distance of isolation first leads to multi-channel beamforming of the antennas, the antennas cannot be reused in the transmitting and receiving time slots, and gain and other indicators are deteriorated, ultimately resulting in a decrease in the overall coverage distance and beam scanning capability of an Active Antenna Unit (AAU). In addition, in order to ensure the same antenna gain, it is necessary to expand an antenna plane of the transmitting and receiving antennas, but this results in increased windward side, increased volume, and increased cost.

Based on this issue, the embodiments of the present application creatively propose application of the antenna grouping technology in the single integrated sensing and communication base station. In the communication time slot, distinction between transmission and reception is not made in the antenna array 207. The transmitting and receiving time slots of communication, like traditional ones, may share the entire antenna plane, with gain, beamforming, and corresponding scanning capabilities unchanged. In the sensing time slot, the antenna array 207 is grouped, and antennas that meet the isolation index requirements are divided into transmitting and receiving channels to ensure that the sensing function is achieved under the premise of not affecting the self-interference of the radar transmission signal.

In addition, future sensing scenarios are constantly changing, including but not limited to low-altitude security of smart unmanned aerial vehicles, smart transportation, smart weather monitoring, etc. The sensing performance requirements for different scenarios are different. The single integrated sensing and communication base station involved in the embodiments of the present application may achieve intelligent configurations. After product preparation, the isolation ability between the antennas is imported into the device configuration, and transmitting and receiving antenna groups may be selected adaptively according to the requirements of the sensing scenarios.

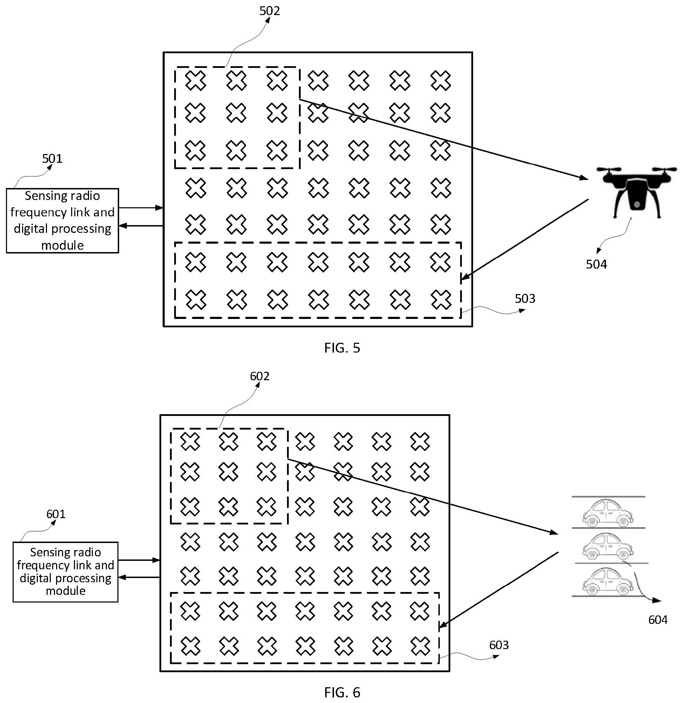

As shown in FIG. 5, for scenarios requiring low sensing performance, such as unmanned aerial vehicle 504 monitoring and other scenarios, only target intrusion recognition is performed, and performance requirements such as accuracy and resolution are not high. The base station may select fewer transmitting antennas 502 (corresponding to the first group of antennas in the previous embodiment) and receiving antennas 503 (corresponding to the second group of antennas in the previous embodiment) that meet the isolation requirements. The sensing signal is transmitted from a sensing radio frequency link and digital processing module 501 to the transmitting antenna 502 so as to be sent out, and an echo signal reflected by an unmanned aerial vehicle 504 enters the receiving antennas 503, and then transmitted to the sensing radio frequency link and digital processing module 501 to achieve the full sensing process. The selection of fewer transmitting and receiving channels can significantly reduce power consumption and meet the low-carbon and green environmental protection requirements.

As shown in FIG. 6, for scenarios requiring high sensing performance, such as lane and traffic flow 604 monitoring, it is necessary to accurately locate vehicles in different lanes, which imposes a very high requirement on accuracy and resolution performance. The base station needs to select more transmitting antennas 602 (corresponding to the first group of antennas in the previous embodiment) and receiving antennas 603 (corresponding to the second group of antennas in the previous embodiment) that meet the isolation requirements. The sensing signal is transmitted from a sensing radio frequency link and digital processing module 601 to the transmitting antenna 602 so as to be sent out, and an echo signal reflected by a vehicle 604 enters the receiving antennas 603, and then transmitted to the sensing radio frequency link and digital processing module 601 to achieve the full sensing process. Higher performance requirements may be met by adaptively configuring more antennas to meet the requirement of preferentially ensuring the high performance.

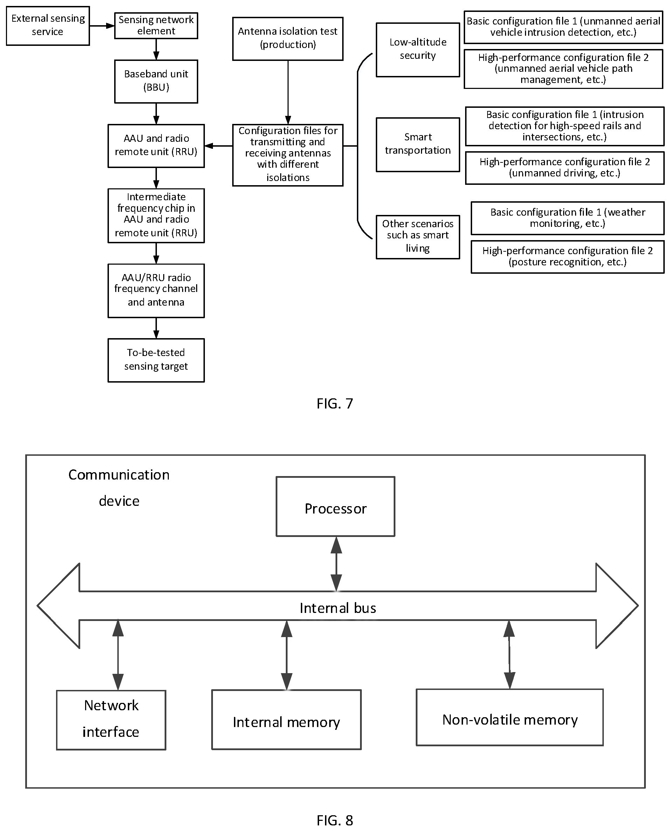

For the entire flexible and adaptive group selection, please refer to FIG. 7. The base station receives the demand of external sensing services and transfers the demand to a sensing network element. The sensing network element transfers a sensing scenario information and task to a baseband unit (BBU). For example, when receiving a sensing service demand of unmanned aerial vehicle intrusion monitoring, a core sensing network element transfers the demand and initiates the sensing task to the BBU. The BBU transmits sensing signaling and sensing sequence data to an AAU and a radio remote unit (RRU). It should be noted here that the AAU and the RRU store a plurality of sets of configuration files for transmitting and receiving antennas with different isolations therein. The isolations between different antennas in this configuration files are measured through OTA test of the produced antennas, and applied to the design of different scenarios. Finally, the plurality of sets of configuration files are generated based on the design results. The plurality of configuration files may cover basic sensory scenarios, including smart transportation, smart low altitude, and smart living, among others. The scenarios are not limited to the description in FIG. 7. For smart transportation, basic configuration files (intrusion detection for high-speed rails and intersections) and high-performance configuration files (unmanned driving, etc.) are also distinguished based on differences in isolation indexes. After receiving the sensing scenario signaling and sensing sequence data transferred by the BBU, the AAU and the RRU load the internally stored configuration file. The configuration file information is transferred to an intermediate frequency processing chip inside the AAU and the RRU. The intermediate frequency processing chip initiates channel-level interrupt control according to the determined configuration file. The final sensing signal is sent to a target to be sensed through the radio frequency channel subjected to the interrupt control and the antenna, and finally, the target to be sensed is transmitted back to the base station in reverse. Based on this, the isolation and the radio frequency channel may be flexibly configured through the scenarios, so as to achieve flexible configuration selection for transmission and reception in a small number of channels in low demand and low-power-consumption scenarios, and a large number of channels in high-performance scenarios.

Overall, different from traditional integrated sensing and communication base stations, the embodiments of the present application creatively propose the flexible antenna grouping technology, which can ensure that the existing communication hardware architecture remains unchanged, and the sensing function may be additionally added to achieve rapid deployment and cost reduction.

FIG. 8 shows a schematic diagram of a hardware structure of a communication device provided by embodiments of the present application. Referring to the figure, at a hardware level, the communication device includes a processor, optionally includes an internal bus, a network interface, and a memory. The memory may include an internal memory such as a high-speed random-access memory (RAM), or a non-volatile memory such as at least one disk memory. Of course, the communication device may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, the bus is represented by only one bi-directional arrow in the figure, but it does not indicate only one bus or one type of bus.

The memory is configured to store a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for locating a target user at a logical level. The processor executes the program stored in the memory, and is specifically configured to perform the method disclosed in the embodiments shown in FIG. 1 to FIG. 7, and achieve the functions and beneficial effects of various methods described in the foregoing method embodiments, which will not be repeated here.

The above method disclosed in the embodiments shown in FIG. 1 to FIG. 7 of the present application may be applied to the processor or implemented by the processor. The processor may be an integrated circuit chip having a signal processing capability. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The communication device can also perform the methods described in the foregoing method embodiments, and achieve the functions and beneficial effects of the methods described in the foregoing method embodiments, and will not be repeated here.

Certainly, in addition to the software implementations, the communication device of the present application does not exclude other implementations, such as logic devices or combinations of software and hardware, that is, an execution body of the following process flows is not limited to each logic unit, but may be hardware or logic devices.

Embodiments of the present application further proposes a computer-readable storage medium. The computer-readable medium stores one or more programs that, when executed by a communication device including a plurality of applications, cause the communication device to perform the methods disclosed in the embodiments shown in FIG. 1 to FIG. 7 and to achieve the functions and beneficial effects of the methods described in the foregoing method embodiments, which will not be repeated here.

The computer-readable storage medium includes: a read-only memory (ROM), a random access memory (RAM), a magnetic disk or an optical disk, etc.

Further, embodiments of the present application further provides a computer program product. The computer program product includes a computer program stored on a non-transitory computer-readable storage medium, the computer program includes program instructions, and the program instructions, when executed by a computer, implement the following flow: the methods disclosed in the embodiments shown in FIG. 1 to FIG. 7, and achieve the functions and beneficial effects of the methods described in the foregoing method embodiments, which will not be repeated here.

In total, the above is merely preferred embodiments of the present application and is not intended to limit the protection scope of the present application. Any modifications, equivalent replacements, improvements, etc. made within the spirit and principle of the present application shall fall within the scope of protection of the present application.

The system, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. Information can be computer-readable instructions, data structures, modules of programs, or other data. Examples of the computer storage medium include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, and may be used to store information that can be accessed by a computing apparatus. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further limitations, the elements limited by a statement "including one..." do not exclude the existence of other identical elements in the process, method, commodity or device that includes the said elements.

The various embodiments in this specification are described in a progressive manner, and the same or similar parts between the various embodiments can be referred to each other. Each embodiment focuses on contents different from other embodiments. In particular, as for the system embodiments, as they are basically similar to the method embodiments, the description is relatively simple. As for related parts, please refer to part of the description in the method embodiments.

## Claims

1. A communication and sensing method, comprising:
acquiring sensing signaling; and
determining, based on the sensing signaling, a first group of antennas and a second group of antennas in an antenna array, wherein in a sensing time-domain unit, the first group of antennas are used for transmitting a sensing signal and the second group of antennas are used for receiving the reflected sensing signal; and in a communication time-domain unit, all antennas in the antenna array are used for communication beamforming.

2. The method according to claim 1, wherein the sensing signaling is used for indicating a sensing performance requirement, and determining, based on the sensing signaling, the first group of antennas and the second group of antennas in the antenna array comprises:
determining, based on the sensing performance requirement, a target antenna configuration file from a plurality of sets of antenna configuration files; and
determining, based on the target antenna configuration file, the first group of antennas and the second group of antennas in the antenna array;
wherein, among the plurality of sets of antenna configuration files, at least two sets of antenna configuration files correspond to different sensing performance requirements respectively.

3. The method according to claim 2, wherein
a level of the sensing performance requirement is positively correlated with a number of antennas in the first group of antennas;
and/or
a level of the sensing performance requirement is positively correlated with a number of antennas in the second group of antennas.

4. The method according to claim 2 or 3, wherein the method further comprises: generating the plurality of sets of antenna configuration files based on at least one of the following:
an isolation between different antennas in the antenna array; or
following contents respectively required by the plurality of different sensing performance requirements: a number of antennas in the first group of antennas and a number of antennas in the second group of antennas.

5. The method according to claim 1, wherein the sensing signaling is used for indicating sensing sequence data, and the method further comprises:
transmitting the sensing signal by the first group of antennas and receiving the reflected sensing signal by the second group of antennas in the sensing time-domain unit and based on the sensing sequence data.

6. A communication device, comprising:
an antenna array that supports being divided into a first group of antennas and a second group of antennas, wherein in a sensing time-domain unit, the first group of antennas are used for transmitting a sensing signal and the second group of antennas are used for receiving the reflected sensing signal; and in a communication time-domain unit, all antennas in the antenna array are used for communication beamforming.

7. The communication device according to claim 6, further comprising a storage module, wherein the storage module stores a plurality of sets of antenna configuration files, at least two sets of antenna configuration files correspond to different sensing performance requirements respectively, and the sensing performance requirement is used for determining a target antenna configuration file from the plurality of sets of antenna configuration files.

8. The communication device according to claim 7, wherein
a level of the sensing performance requirements is positively correlated with a number of antennas in the first group of antennas;
and/or
a level of the sensing performance requirements is positively correlated with a number of antennas in the second group of antennas.

9. A communication device, comprising:
a processor; and
a memory, arranged to store computer executable instructions, wherein the executable instructions, when executed, use the processor to execute the steps of the method according to any one of claims 1 to 5.

10. A computer-readable medium storing one or more programs, wherein the one or more programs, when executed by a communication device comprising a plurality of applications, cause the communication device to execute the steps of the method according to any one of claims 1 to 5.
